# EUROPÄISCHE PATENTSCHRIFT

(11) **EP 1 178 344 B1**
(45) Veröffentlichungstag und Bekanntmachung des Hinweises auf die Patenterteilung: **23.08.2006**
(21) Anmeldenummer: 01117175.8
(22) Anmeldetag: 14.07.2001
(51) Int. Cl.: G02B 21/00

(54) **Verfahren und Vorrichtung zur Bildentzerrung in der Scanmikroskopie und Scanmikroskop**
Method and apparatus for image restitution in scanning microscopy and scanning microscope
Méthode et appareil pour la restitution d'image pour la microscopie à balayage et microscope à balayage

(30) Priorität: 03.08.2000 DE 10037783
(43) Veröffentlichungstag der Anmeldung: 06.02.2002
(73) Patentinhaber: Leica Microsystems CMS GmbH, 35578 Wetzlar (DE)
(72) Erfinder: Engelhardt, Johann, Dr., 76669 Bad Schönborn (DE)
(74) Vertreter: Reichert, Werner Franz

(56) Entgegenhaltungen:
- DE-A- 4 017 549
- "DIGITAL POSITION ENCODING OF GALVANOMETER SCANNER IN A LASER MICROSCOPE" OPTICAL ENGINEERING, SOC. OF PHOTO-OPTICAL INSTRUMENTATION ENGINEERS. BELLINGHAM, US, Bd. 27, Nr. 9, 1. September 1988 (1988-09-01), Seiten 818-822, XP000000354 ISSN: 0091-3286
- PATENT ABSTRACTS OF JAPAN vol. 1997, no. 11, 28. November 1997 (1997-11-28) -& JP 09 197280 A (OLYMPUS OPTICAL CO LTD), 31. Juli 1997 (1997-07-31)
- PATENT ABSTRACTS OF JAPAN vol. 2000, no. 01, 31. Januar 2000 (2000-01-31) -& JP 11 271626 A (OLYMPUS OPTICAL CO LTD), 8. Oktober 1999 (1999-10-08)
- PATENT ABSTRACTS OF JAPAN vol. 017, no. 258 (P-1540), 20. Mai 1993 (1993-05-20) -& JP 05 002135 A (FUJI PHOTO FILM CO LTD), 8. Januar 1993 (1993-01-08) -& US 5 218 195 A 8. Juni 1993 (1993-06-08)
- PATENT ABSTRACTS OF JAPAN vol. 016, no. 218 (P-1357), 21. Mai 1992 (1992-05-21) -& JP 04 042116 A (FUJI PHOTO FILM CO LTD), 12. Februar 1992 (1992-02-12)

## Beschreibung

Die Erfindung betrifft ein Verfahren zur Phasenkorrektur von Positions- und Detektionssignalen in der Scanmikroskopie. Das Scanmikroskop kann auch als konfokales Mikroskop ausgestaltet sein.

Desweiteren betrifft die Erfindung eine Vorrichtung zur Phasenkorrektur von Positions- und Detektionssignalen in der Scanmikroskopie.

Ferner betrifft die Erfindung ein Scanmikroskop, das die Phasenkorrektur von Positions- und Detektionssignalen ermöglicht. Im besonderen betrifft die Erfindung ein Scanmikroskop gemäß den Merkmalen des Oberbegriffs des Anspruchs 11.

In der Scanmikroskopie wird eine Probe mit einem Lichtstrahl beleuchtet, um das von der Probe emittierte Reflexions- oder Fluoreszenzlicht zu beobachten. Der Fokus des Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so daß ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Dimensionen abgetastet.

Ein konfokales Rastermikroskop umfaßt im allgemeinen eine Lichtquelle, eine Fokussieroptik, mit der das Licht der Quelle auf eine Lochblende - die sog.

Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so daß man eine Punktinformation erhält, die durch sequentielles Abtasten des Objekts zu einem dreidimensionalen Bild führt. Meist wird ein dreidimensionales Bild durch schichtweise Bilddatennahme erzielt.

Idealer Weise beschreibt die Bahn des Abtastlichtstrahles auf bzw. in dem Objekt einen Mäander. (Abtasten einer Zeile in x-Richtung bei konstanter y-Position, anschließend x-Abtastung anhalten und per y-Verstellung auf die nächste abzutastende Zeile schwenken und dann bei konstanter y-Position diese Zeile in negative x-Richtung abtasten u.s.w.).

Die Leistung des vom Objekt kommenden Lichtes wird in festen Zeitabständen während des Abtastvorganges gemessen und so Rasterpunkt für Rasterpunkt abgetastet. Der Meßwert muss eindeutig der dazugehörigen Scanposition zugeordnet werden, um aus den Meßdaten ein Bild erzeugen zu können. Zweckmäßiger Weise werden hierfür die Zustandsdaten der Verstellelemente der Strahlablenkeinrichtung laufend mitgemessen oder, was allerdings weniger genau ist, direkt die Steuersolldaten der Strahlablenkeinrichtung verwendet.

Die genaue Zuordnung der Positionssignale zu den Detektionssignalen ist von besonderer Wichtigkeit. Bei der Zuordnung sind Laufzeitunterschiede und die unterschiedlichen Verarbeitungszeiten der die Signale erfassenden Detektoren, beispielsweise mit Hilfe von Verzögerungselementen, zu berücksichtigen. Hierbei müssen sehr hohe Anforderungen an die Stabilität gestellt werden. Beispielsweise müssen bei einer Bildbreite von 1000 Bildpunkten die Laufzeitschwankungen deutlich unter 1 ‰ bleiben.

Die Abtastbahn weicht bei zunehmend höherer Abtastgeschwindigkeit mehr und mehr von der Mäanderform ab. Dieses Phänomen ist im Wesentlichen auf die Massenträgheit der bewegten Elemente zurückzuführen. Bei schnellem Abtasten ähnelt die Abtastbahn eher einer Sinuskurve, wobei es jedoch oft vorkommt, dass sich die Teil-Bahnkurve für die Abtastung in positive x-Richtung von der Teil-Bahnkurve bei der Abtastung in negative x-Richtung unterscheidet.

Selbst wenn elektronische Elemente zum Abgleich von Laufzeitunterschieden und Verarbeitungszeiten vorgesehen sind, so erfolgt ein Abgleich jedoch nur bei der Herstellung des Scanmikroskops. Diese Einstellung ist jedoch streng genommen nur für eine Abtastgeschwindigkeit gültig.

Leider sind sowohl die signalführenden Elemente, als auch die elektronischen Bauteile, die zum Abgleich verwendet werden, sowie die die Meßwerte erfassenden Detektoren temperaturempfindlich, so dass es schon bei leicht veränderlicher Temperatur zu Zuordnungsfehlern kommt.

Zusätzlich zu dem Problem des nur für eine Abtastgeschwindigkeit geltenden Abgleichs kommt erschwerend hinzu, dass dieser auch nur für die bei der Herstellung des Scanmikroskops herrschende Temperatur gültig ist.

Ganz besonders störend zeigen sich Abgleichsfehler bei mäanderförmiger Abtastung; denn der Abgleichsfehler bei Abtastung in positiver x-Richtung und bei Abtastung in negativer x-Richtung wirken in entgegengesetzten Richtungen, was zu besonders kammartig verzerrten Bildern führt.

Der Erfindung liegt daher die Aufgabe zugrunde, ein Verfahren zum Abtasten mikroskopischer Präparate mit einem Lichtstrahl anzugeben, mit dem auch bei wechselnden Abtast- und Umgebungsparametern eine optimale Zuordnung von Positionssignalen und Detektionssignalen ermöglicht ist.

Die objektive Aufgabe wird durch das Verfahren nach Anspruch 1 gelöst.

Es ist zusätzlich eine Aufgabe der Erfindung eine Vorrichtung zur Phasenkorrektur von Positions- und Detektionssignalen in der Scanmikroskopie, mit der auch bei wechselnden Abtast- und Umgebungsparametern eine optimale Zuordnung von Positionssignalen und Detektionssignalen ermöglicht ist.

Diese Aufgabe wird gelöst durch eine Vorrichtung mit den Merkmalen des kennzeichnenden Teils des Anspruchs 6.

Eine weitere Aufgabe der Erfindung ist es ein Scanmikroskop zu schaffen, das entsprechend ausgestaltet ist, um eine Phasenkorrektur von Positions- und Detektionssignalen eines Scanmikroskops zu erzielen, wobei auch bei wechselnden Abtast- und Umgebungsparametern eine optimale Zuordnung von Positionssignalen und Detektionssignalen ermöglicht ist.

Diese Aufgabe wird gelöst durch ein Scanmikroskop gemäß Anspruch 10.

Die Erfindung hat den Vorteil, dass dem Benutzer mehrere Möglichkeiten vorgeschlagen werden, die eine einfache Korrektur der Zeitdifferenz zwischen dem Positionssignal und dem Detektionssignal ermöglichen. In einer vorteilhaften Ausführungsform wird die Einstellung der Zeitdifferenz direkt vom Benutzer vorgenommen. Hierzu sind auf einem der Displays Slider dargestellt und die Einstellung erfolgt in der Weise, dass der Benutzer z.B. mit der Maus die Stellung der Slider derart verändert, dass zwischen dem Positionssignal und dem Detektionssignal keine Zeitdifferenz mehr auftritt. Auf dem Display wird das Ergebnis der neuen Einstellung in Echtzeit dargestellt. So ist z.B. ein scharfes Abbild auf dem Display zu sehen, wenn Positionssignal und Detektionssignal phasengleich aufgenommen oder entsprechend korrigiert werden.

Auch eine automatische Einstellung der Zeitdifferenz ist möglich. Hierzu ist ein Steuerkreis mit einem Temperaturfühler und einer Datenspeichereinheit vorgesehen. In der Datenspeichereinheit sind die zu jeder Abtastgeschwindigkeit und Temperatur gehörigen Korrekturwerte, die in einer Kalibrationsmessreihe ermittelt wurden, abgespeichert. Die Temperatur wird laufend oder in festen Zeitabständen gemessen und der zur gemessenem Temperatur und zur aktuellen Abtastgeschwindigkeit gehörige Korrekturwert aus der Datenspeichereinheit ausgelesen und die Elemente zum Abgleich der Laufzeitunterschiede und Meßwertverarbeitungszeiten eingestellt. Die Korrekturwerte können z.B. in Form einer Tabelle abgelegt werden.

Eine weitere Ausführungsform zur automatischen Einstellung des Laufzeitabgleichs beinhaltet einen Regelkreis mit einer Bildverarbeitungssoftware, wie sie beispielsweise auch aus Autofokussystemen bekannt ist, die die optimale Einstellung des Laufzeitabgleichs hinsichtlich optimaler Bildschärfe aus dem aktuellen Abbild des Objekts ermittelt. Dies könnte beispielsweise durch Korrelationsvergleich der Detektionssignale benachbarter Zeilen erfolgen.

In der Zeichnung ist der Erfindungsgegenstand schematisch dargestellt und wird anhand der Figuren nachfolgend beschrieben. Dabei zeigen:
- Fig. 1: eine erfindungsgemäße Anordnung mit einem konfokalen Scanmikroskop,
- Fig. 2: eine erfindungsgemäße Anordnung mit einer von der Abtastgeschwindigkeit und der Temperatur abhängigen Steuerung und
- Fig. 3: eine erfindungsgemäße Anordnung mit einer eine Bildverarbeitungseinheit umfassenden Regelung.

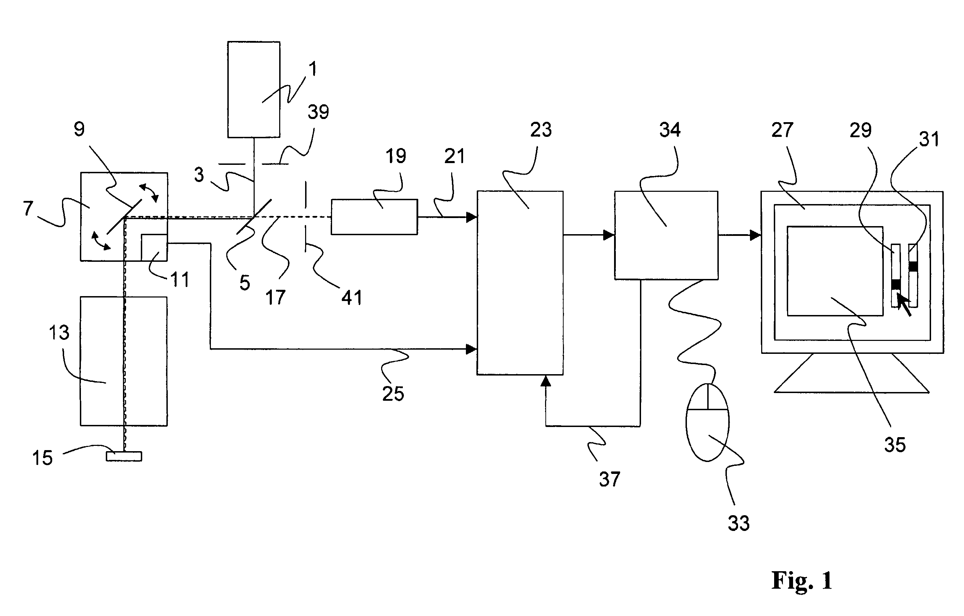

Fig. 1 zeigt schematisch ein konfokales Scanmikroskop. Der von einem Beleuchtungssystem 1 kommende Lichtstrahl 3 wird von einem Strahlteiler 5 zum Scanmodul 7 reflektiert, das einen kardanisch aufgehängten Scanspiegel 9 beinhaltet, der den Strahl durch die Mikroskopoptik 13 hindurch über bzw. durch das Objekt 15 führt. Der Lichtstrahl 3 wird bei nicht transparenten Objekten 15 über die Objektoberfläche geführt. Bei biologischen Objekten 15 (Präparaten) oder transparenten Objekten kann der Lichtstrahl 3 auch durch das Objekt 15 geführt werden. Dies bedeutet, dass aus verschiedenen Fokusebenen des Objekts nacheinander durch den Lichtstrahl 3 abgetastet werden. Die nachträgliche Zusammensetzung ergibt dann ein dreidimensionales Bild des Objekts. Der vom Beleuchtungssystem 1 kommende Lichtstrahl 3 ist in allen Abbildungen (Fig. 1 bis Fig. 3) als durchgezogene Linie dargestellt. Das vom Objekt 15 ausgehende Licht 17 gelangt durch die Mikroskopoptik 13 und über das Scanmodul 7 zum Strahlteiler 5, passiert diesen und trifft auf Detektor 19, der als Photomultiplier ausgeführt ist. Das vom Objekt 15 ausgehende Licht 17 ist in allen Abbildungen (Fig. 1 bis Fig. 3) als gestrichelte Linie dargestellt. Im Detektor 19 werden elektrische, zur Leistung des vom Objekt ausgehenden Lichtes 17 proportionale Detektionssignale 21 erzeugt und an die Verarbeitungseinheit 23 weitergegeben. Die im Scanmodul mit Hilfe eines induktiv oder kapazitiv arbeitenden Positionssenors 11 erfassten Positionssignale 25 werden ebenfalls an die Verarbeitungseinheit 23 übergeben. Es ist für einen Fachmann selbstverständlich, dass die Position des Scanspiegels 9 auch über die Verstellsignale ermittelt werden kann. Die eingehenden, Analogsignale werden in der Verarbeitungseinheit 23 zunächst digitalisiert. Die Verarbeitungseinheit 23 umfasst zwei Verzögerungselemente (nicht dargestellt), von denen eines von den Detektionssignalen 23, das andere von den Positionssignalen 25 durchlaufen wird. Die Verzögerungsdauer kann vom Benutzer über einen PC 34, an dem eine Eingabeeinheit 33 angeschlossen ist, eingestellt werden. Auf einem Display 27 sind ein erster und ein zweiter Slider 29 und 31 dargestellt, über die die Verzögerungsdauer der zwischen den beiden Signalen eingestellt wird. Der PC 34 gibt die entsprechenden Daten über die Leitung 37 an die Verarbeitungseinheit 23 weiter. Die Positions- und Detektionssignale werden in der Verarbeitungseinheit 23 in Abhängigkeit von der jeweils eingestellten Verzögerungsdauer einander zugeordnet und zu einem Abbild 35 zusammengesetzt, das auf dem Display 27 angezeigt wird. Der Benutzer kann die Auswirkungen der Verstellung der Slider 29, 31 gleichzeitig an der Schärfe des Abbildes 35 ablesen. Die Slider 29, 31 werden als Stellelemente bezeichnet. Für die Erfindung ist es unerheblich in welcher Form die Stellelemente auf dem Display 27 dargestellt werden. Das bei einem konfokalen Scanmikroskop üblicherweise vorgesehene Beleuchtungspinhole 39 und das Detektionspinhole 41 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt.

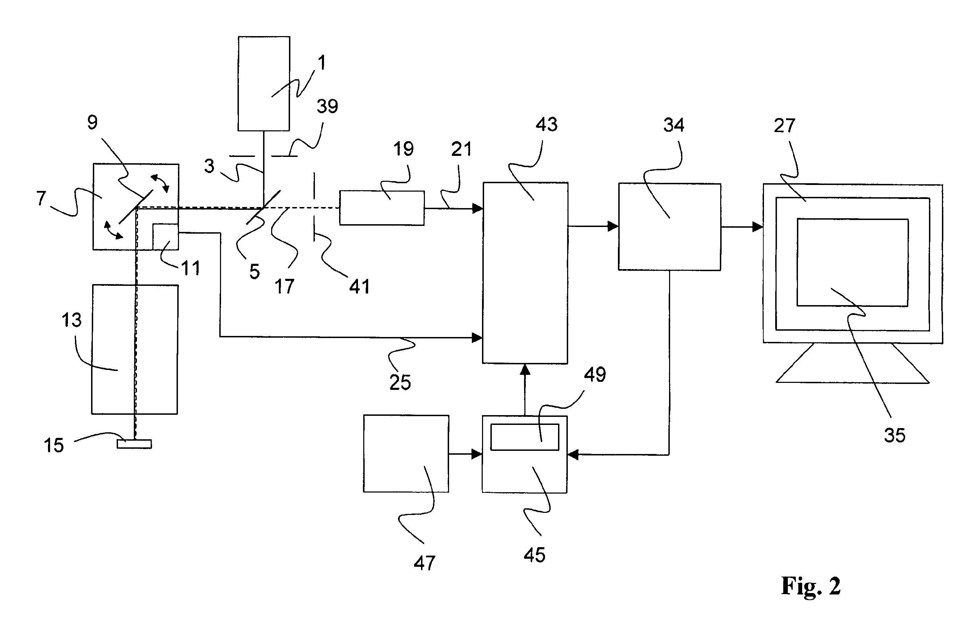

Fig. 2 zeigt einen konfokales Scanmikroskop, dessen optischer Teil dem in Fig. 1 dargestellten entspricht. Auch bei dieser Ausgestaltung werden die Positionssignale 25 und Detektionssignale 21 in eine Verarbeitungseinheit 43 geführt, die ebenfalls zwei Verzögerungselemente (nicht dargestellt) umfaßt, von denen eines von den Detektionssignalen, das andere von den Positionssignalen durchlaufen wird. Die jeweilige Verzögerungsdauer wird von einer Steuereinheit 45 automatisch vorgegeben, die von dem PC 34 Informationen hinsichtlich der aktuellen Abtastgeschwindigkeit und von einem Temperaturfühler 47 Information bezüglich der aktuellen Temperatur erhält. Die Steuereinheit 45 umfaßt einen Datenspeicher 49, in dem die zu jeder Abtastgeschwindigkeit und Temperatur gehörigen Verzögerungswerte, die in einer Kalibrationsmessreihe ermittelt wurden, abgespeichert sind. Die entsprechenden Werte können z.B. im Datenspeicher 49 im Form einer Tabelle abgelegt sein. Die Temperatur wird in festen Zeitabständen gemessen oder vor jeder neuen Bildnahme und der zur gemessenem Temperatur und zur aktuellen Abtastgeschwindigkeit gehörigen Verzögerungswerte aus dem Datenspeicher 49 zugeordnet, ausgelesen und an die Verarbeitungseinheit 43 weitergegeben.

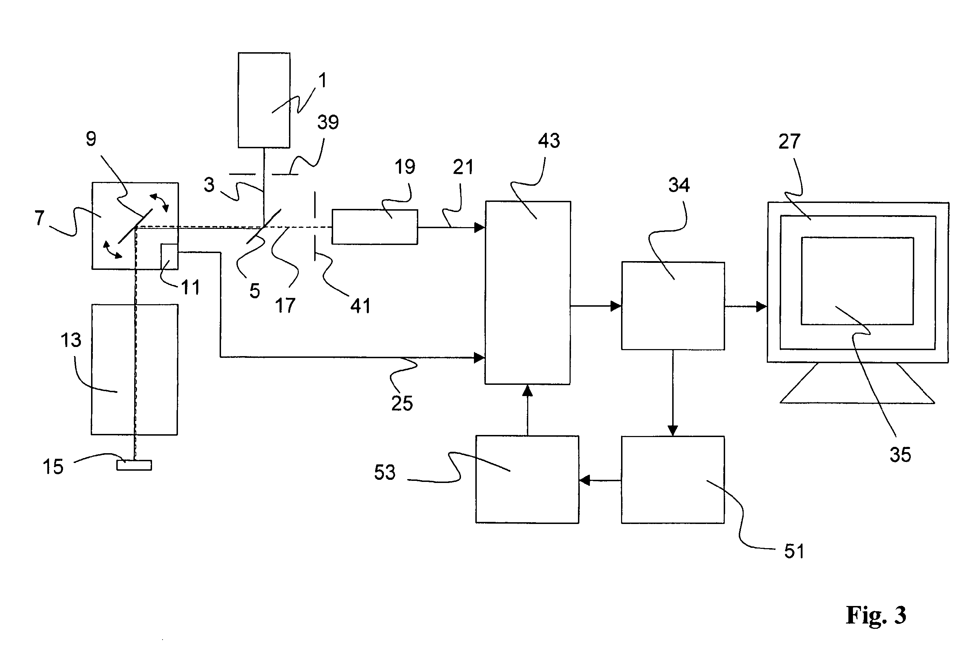

Fig. 3 zeigt eine weitere erfindungsgemäße Ausgestaltung mit einem konfokalen Mikroskop, bei der genauso wie bei den Anordnungen aus Fig.1 und Fig. 2 die Positionssignale 25 und Detektionssignale 21 in eine Verarbeitungseinheit 43 geführt werden, die zwei Verzögerungselemente (nicht dargestellt) umfaßt, von denen eines von den Detektionssignalen, das andere von den Positionssignalen durchlaufen wird. Auch hier werden die Positions- und Detektionssignale in der Verarbeitungseinheit 43 in Abhängigkeit von der jeweils eingestellten Verzögerungsdauer einander zugeordnet und zu einem Abbild 35 zusammengesetzt, das zum einen auf dem Display 27 angezeigt wird, zum anderen einer Bildverarbeitungseinheit 51, die aus einem Rechner mit einer geeigneten Bildverarbeitungssoftware besteht, weitergeleitet wird. In dieser Bildverarbeitungseinheit 51 wird der aktuelle Verzerrungsgrad des Abbildes ermittelt. Der Verzerrungsgrad resultiert daraus, dass aufgrund der Trägheit des Scanmoduls 7 und der möglichen Verzögerung durch den Detektor 19 die Postitionssignale 21 und die Detektionssignale 25 nicht genau zeitgleich verarbeitet werden. Die Zuordnung von Ortsdaten und detektierten Lichtsignalen stimmt nicht genau überein, so dass für ein korrektes Bild eine Korrektur notwendig ist. Der ermittelte Verzerrungsgrad wird an eine Steuereinheit 53 übermittelt, die die hinsichtlich optimaler Schärfe einzustellenden Verzögerungswerte errechnet und an die Verarbeitungseinheit 43 zur Einstellung dieser Werte weiterreicht.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Beleuchtungssystem
- 3: Lichtstrahl
- 5: Strahlteiler
- 7: Scanmodul
- 9: Scanspiegel
- 11: Positionssensor
- 13: Mikroskopoptik
- 15: Objekt
- 17: vom Objekt 15 ausgehendes Licht
- 19: Detektor, Photomultiplier
- 21: Detektionssignale
- 23: Verarbeitungseinheit
- 25: Positionssignale
- 27: Display
- 29: erster Slider
- 31: zweiter Slider
- 33: Eingabeeinheit
- 34: PC
- 35: Abbild des Objekts 15
- 37: Leitung
- 39: Beleuchtungspinhole
- 41: Detektionspinhole
- 43: Verarbeitungseinheit
- 45: Steuereinheit
- 47: Temperaturfühler
- 49: Datenspeicher
- 51: Bildverarbeitungseinheit
- 53: Steuereinheit

## Patentansprüche

1. Verfahren zur Phasenkorrektur von Positions- und Detektionssignalen in der Scanmikroskopie **gekennzeichnet durch** die folgenden Schritte:
• Erzeugen eines Positionssignals aus der Stellung einer Strahlablenkeinrichtung (7) und Erzeugen mindestens eines zum Positionssignal (25) gehörenden Detektionssignals (21) aus dem vom Objekt (15) ausgehenden Licht (17),
• Übergeben des Positionssignals (25) und des Detektionssignals (21) an eine Verarbeitungseinheit (23, 43),
• Darstellen eines Abbildes (35) des Objekts (15) auf einem Display
• Verstellen von auf dem Display dargestellten Stellelementen, um aus der Verstellung mindestens einen Korrekturwert zu ermitteln, und
• Übergeben des Korrekturwertes an die Verarbeitungseinheit (23, 43) zum Abgleich von Zeitdifferenzen zwischen dem Positionssignal (25) und dem Detektionssignal (21).

2. Verfahren nach Anspruch 1, **dadurch gekennzeichnet, dass** der Korrekturwert aus der Einstellung von auf dem Display (27) dargestellten Stellelementen (29, 32) und gleichzeitig aus der daraus resultierenden Schärfe des auf dem Display (27) dargestellten Abbildes (35) des Objekts (15) ermittelt wird.

3. Verfahren nach Anspruch 1, **dadurch gekennzeichnet, dass** die zu jeder Abtastgeschwindigkeit und Temperatur gehörigen Korrekturwerte gemäss Anspruch 1 ermittelt wurden, diese Korrekturwerte in einer Kalibrationsmessreihe in einer Datenspeichereinheit abgespeichert wurden,
wobei mit einem Steuerkreis mit einem Temperaturfühler die Temperatur laufend oder in festen Zeitabständen gemessen wird und der zur gemessenem Temperatur und zur aktuellen Abtastgeschwindigkeit gehörige Korrekturwert aus der Datenspeichereinheit ausgelesen und an die Verarbeitungseinheit übergeben wird.

4. Verfahren nach Anspruch 3, **dadurch gekennzeichnet, dass** die Zuordnung der Positionssignale (25) und der Detektionssignale (21) in Raum und Zeit durch die Anwendung des Korrekturwertes erfolgt.

5. Verfahren nach einem der Ansprüche 1 bis 4, **dadurch gekennzeichnet, dass** das durch die Positionssignale (25) und Detektionssignale (21) erzeugte Abbild (35) mit der Bildverarbeitungssoftware verarbeitet wird, wobei das korrigierte Abbild oder zumindest ein Teil des Objektes auf dem Display (27) dargestellt werden.

6. Vorrichtung zur Phasenkorrektur von Positions- und Detektionssignalen in der Scanmikroskopie, **dadurch gekennzeichnet, dass**
• Mittel (11) zum Erzeugen eines Positionssignals aus der Stellung einer Strahlablenkeinrichtung und Mittel (19) zum Erzeugen eines zum Positionssignal gehörenden Detektionssignals aus dem von einem Objekt (15) ausgehenden Lichts vorgesehen sind;
• eine Verarbeitungseinheit (34) das Positionssignal (25) und das Detektionssignals (21) übernimmt;
• ein Display zum Darstellen eines Abbildes (35) des Objekts (15); Mittel zum Verstellen von auf dem Display dargestellten Stellelementen, um aus der Verstellung mindestens einen Korrekturwert zu ermitteln; und
• Mittel (23, 43) zum Bestimmen eines Korrekturwertes, die mit der Verarbeitungseinheit (34) verbunden sind und die an die Verarbeitungseinheit (34) den Korrekturwert zum Abgleich von Zeitdifferenzen zwischen dem Positionssignal (25) und dem Detektionssignal (21) übergeben.

7. Vorrichtung nach Anspruch 6, **dadurch gekennzeichnet, dass** ein Gesamteindruck des auf dem Display (27) dargestellten Abbildes (35) des Objekts (15) durch die Verstellung der auf dem Display (27) dargestellten Stellelemente (29, 31) ermittelbar ist.

8. Vorrichtung nach Anspruch 6, **dadurch gekennzeichnet, dass**
ein Steuerkreis mit einem Temperaturfühler und einer Datenspeichereinheit vorgesehen ist, dass in der Datenspeichereinheit, die zu jeder Abtastgeschwindigkeit und Temperatur die gehörigen Korrekturwerte in einer Kalibrationsmessreihe abgespeichert sind, dass ein Temperaturfühler (47) vorgesehen ist, der die Temperatur laufend oder in festen Zeitabständen misst
und die zur gemessenem Temperatur und zur aktuellen Abtastgeschwindigkeit gehörige Korrekturwerte aus der Datenspeichereinheit auslesbar und an die Verarbeitungseinheit übergebbar sind.

9. Vorrichtung nach einem der Ansprüche 6 bis 8, **dadurch gekennzeichnet, dass** Mittel (34) zur Digitalisierung bzw. Umsetzung in elektronisch verarbeitbare Information vorgesehen sind.

10. Scanmikroskop mit einem Scanmodul (7), das einen von einem Beleuchtungssystem (1) erzeugten Lichtstrahl (3) über ein Objekt (15) scannt und mindestens einen Detektor (19), der ein vom Objekt (15) ausgehendes Licht (17) empfängt, nach einem der Ansprüche 6 bis 9.

## Claims

1. Method for the phase correction of position and detection signals in scanning microscopy, **characterized by** the following steps:
• generating a position signal from the setting of a beam deflection instrument (7) and generating at least one detection signal (21) associated with the position signal (25) from the light (17) emerging from the object (15),
• transferring the position signal (25) and the detection signal (21) to a processing unit (23, 43),
• representing an image (35) of the object (15) on a display,
• adjusting control elements represented on the display, in order to determine at least one correction value from the adjustment, and
• transferring the correction value to the processing unit (23, 43) in order to balance time differences between the position signal (25) and the detection signal (21).

2. Method according to Claim 1, **characterized in that** the correction value is determined from the setting of control elements (29, 32) represented on the display (27) and simultaneously from the resulting focus of the image (35) of the object (15) represented on the display (27).

3. Method according to Claim 1, **characterized in that** the correction values associated with each sampling speed and temperature have been determined according to Claim 1, these correction values have been stored in a calibration measurement series in a data storage unit, the temperature being measured continuously or at fixed time intervals by a control loop with a temperature sensor and the correction values associated with the measured temperature and with the current sampling speed being read out from the data storage unit and transferred to the processing unit.

4. Method according to Claim 3, **characterized in that** the allocation of the position signals (25) and the detection signals (21) in space and time is carried out by applying the correction value.

5. Method according to one of Claims 1 to 4, **characterized in that** the image (35) generated by the position signals (25) and the detection signals (21) is processed with the image processing software, the corrected image or at least a part of the object being represented on the display (27).

6. Device for the phase correction of position and detection signals in scanning microscopy, **characterized in that**
• means (11) are provided for generating a position signal from the setting of a beam deflection instrument, and means (19) are provided for generating a detection signal associated with the position signal from the light emerging from the object (15);
• a processing unit (34) receives the position signal (25) and the detection signal (21);
• a display for representing an image (35) of the object (15);
• means for adjusting control elements represented on the display, in order to determine at least one correction value from the adjustment; and
• means (23, 43) for determining a correction value, which are connected to the processing unit (34) and which transfer the correction value to the processing unit (34) in order to balance time differences between the position signal (25) and the detection signal (21).

7. Device according to Claim 6, **characterized in that** an overall impression of the image (35) of the object (15) represented on the display (27) can be determined by adjusting the control elements (29, 31) represented on the display (27).

8. Device according to Claim 6, **characterized in that** a control loop with a temperature sensor and a data storage unit is provided, **in that** the associated correction values are stored for each sampling speed and temperature in a calibration measurement series in the data storage unit, **in that** a temperature sensor (47) is provided which measures the temperature continuously or at fixed time intervals, and the correction values associated with the measured temperature and with the current sampling speed can be read out from the data storage unit and transferred to the processing unit.

9. Device according to one of Claims 6 to 8, **characterized in that** means (34) are provided for digitization or conversion into electronically processable information.

10. Scanning microscope having a scanning module (7) which scans a light beam (3) generated by an illumination system (1) over an object (15) and at least one detector (19) which receives light (17) emerging from the object (15), according to one of Claims 6 to 9.

## Revendications

1. Procédé de correction de phase de signaux de position et de détection en microscopie à balayage, **caractérisé par** les étapes suivantes consistant à :
- générer un signal de position à partir de la position d'un dispositif de déflexion de faisceau (7) et générer au moins un signal de détection (21) associé au signal de position (25) à partir de la lumière (17) émanant de l'objet (15),
- délivrer le signal de position (25) et le signal de détection (21) à une unité de traitement (23, 43),
- représenter une image (35) de l'objet (15) sur un affichage,
- ajuster des éléments de réglage représentés sur l'affichage afin de déterminer à partir de l'ajustement au moins une valeur de correction, et
- délivrer la valeur de correction à l'unité de traitement (23, 43) pour égaliser des différences de temps entre le signal de position (25) et le signal de détection (21).

2. Procédé selon la revendication 1, **caractérisé en ce que** la valeur de correction est déterminée à partir du réglage des éléments de réglage (29, 32) représentés sur l'affichage (27) et en même temps à partir de la netteté qui en résulte pour l'image (35) de l'objet (15), représentée sur l'affichage (27).

3. Procédé selon la revendication 1, **caractérisé en ce que** les valeurs de correction associées à chaque vitesse de balayage et température ont été déterminées selon la revendication 1, ces valeurs de correction ont été mémorisées dans une série de mesure de calibrage dans une unité de mémoire de données, dans lequel un circuit de commande mesure la température en continu ou à intervalles de temps fixes à l'aide d'une sonde de température, et la valeur de correction associée à la température mesurée et à la vitesse de balayage actuelle est extraite de l'unité de mémoire de données et délivrée à l'unité de traitement.

4. Procédé selon la revendication 3, **caractérisé en ce que** l'affectation des signaux de position (25) et des signaux de détection (21) s'effectue dans l'espace et dans le temps à l'aide de la valeur de correction.

5. Procédé selon l'une quelconque des revendications 1 à 4, **caractérisé en ce que** l'image (35) générée par les signaux de position (25) et les signaux de détection (21) est traitée par le logiciel de traitement d'image, l'image corrigée ou au moins une partie de l'objet étant représentée sur l'affichage (27).

6. Dispositif de correction de phase de signaux de position et de détection en microscopie à balayage, **caractérisé en ce que**
- des moyens (11) pour générer un signal de position à partir de la position d'un dispositif de déflexion de faisceau et des moyens (19) pour générer un signal de détection associé au signal de position à partir de la lumière émanant d'un objet (15) sont prévus ;
- une unité de traitement (34) prend en charge le signal de position (25) et le signal de détection (21) ;
- un affichage pour représenter une image (35) de l'objet (15) ;
- des moyens pour ajuster des éléments de réglage représentés sur l'affichage afin de déterminer d'après l'ajustement au moins une valeur de correction ; et
- des moyens (23, 43) pour déterminer une valeur de correction, qui sont reliés à l'unité de traitement (34) et qui délivrent à l'unité de traitement (34) la valeur de correction pour égaliser des différences de temps entre le signal de position (25) et le signal de détection (21).

7. Dispositif selon la revendication 6, **caractérisé en ce qu'**une impression globale de l'image (35) de l'objet (15), représentée sur l'affichage (27), peut être déterminée par l'ajustement des éléments de réglage (29, 31) représentés sur l'affichage (27).

8. Dispositif selon la revendication 6, **caractérisé en ce qu'**un circuit de commande avec une sonde de température et une unité de mémoire de données est prévu, **en ce que** dans l'unité de mémoire de données, les valeurs de correction associées à chaque vitesse de balayage et température sont mémorisées dans une série de mesure de calibrage, **en ce qu'**une sonde de température (47) est prévue qui mesure la température en continu ou à intervalles de temps fixes, et les valeurs de correction associées à la température mesurée et à la vitesse de balayage actuelle peuvent être extraites de l'unité de mémoire de données et délivrées à l'unité de traitement.

9. Dispositif selon l'une quelconque des revendications 6 à 8, **caractérisé en ce que** des moyens (34) pour la numérisation ou la conversion en informations à traiter de façon électronique sont prévus.

10. Microscope à balayage, comprenant un module de balayage (7) qui balaie un objet (15) avec un faisceau de lumière (3) généré par un système d'éclairage (1), et au moins un détecteur (19) qui reçoit la lumière (17) émanant de l'objet (15), selon l'une quelconque des revendications 6 à 9.
